# EUROPEAN PATENT APPLICATION

(11) **EP 2 042 931 A1**
(43) Date of publication of application: **01.04.2009**
(21) Application number: 08016767.9
(22) Date of filing: 24.09.2008
(51) Int. Cl.: G03G 5/05

(54) **Resin composition for electrophotographic photoconductor and electrophotographic photoconductor using the same**

(30) Priority: 27.09.2007 JP 2007252606
(71) Applicant: Mitsubishi Gas Chemical Company, Inc., Chiyoda-ku Tokyo 100-8324 (JP)
(72) Inventor: Fukushima, Noriyuki, Chita-gun Aichi (JP); Adachi, Takahiro, Kamisu-shi Ibaraki 314-0102 (JP)
(74) Representative: HOFFMANN EITLE

(57) **Abstract**

The present invention provides a resin composition for an electrophotographic photoconductor having excellent image stability and abrasion resistance which comprises a polycarbonate resin and a polysiloxane group-containing A-B type block copolymer consisting of a polysiloxane group-containing copolymer segment-A formed by a vinyl monomer represented by the general formula (1) and a polysiloxane group-containing monomer and a polymersegment-B formed by a vinyl monomer represented by the general formula (1), wherein the content of said polysiloxane group-containing monomer is 10 to 85% by weight based upon said polysiloxane group-containing A-B type block copolymer, and the content of said polysiloxane group-containing A-B type block copolymer is 0.03 to 3 parts by weight based upon 100 parts by weight of said polycarbonate resin. 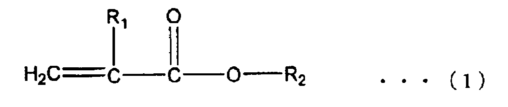 (In the formula (1), R₁ represents a hydrogen atom or a methyl group. R₂ represents a hydrogen atom, an alkyl group having 1 to 18 carbon atoms, or a hydroxyalkyl group having 2 or 3 carbon atoms.)

## Description

### BACKGROUND OF THE INVENTION

### 1) Field of the Invention

The present invention relates to a polycarbonate resin composition comprising a block copolymer having polysiloxane groups and an electrophotographic photoconductor using the same as a binder resin of a carrier transport layer. More precisely, the present invention relates to an electrophotographic photoconductor excellent in stability of electrophotographic images and prolonged service life of the photoconductor wherein abrasion resistance is highly improved and the surface shaving at the time of repeated uses is suppressed.

### 2) Description of the Related Art

Currently, the electrophotographic technology is widely applied for copying machines, laser printers, fax machines and the like because of its high-speed processability, high image quality and so on.

As an electrophotographic photoconductor in the field of this electrophotographic technology, inorganic photoconductive substances such as selenium, selenium/tellurium alloys, selenium/arsenic alloys, cadmium sulfide and the like have mainly been used conventionally. However, recently electrophotographic photoconductors using organic photoconductive substances have been developed from the viewpoint of toxicity, safety, cost, productivity and the like.

When the organic photoconductive substance is a low molecular-weight substance, it is a general practice to mix the organic photoconductive substance with a binder resin to form a coating film. As the binder resin, various thermoplastic resins and thermosetting resins such as polymethylmethacrylate, polystyrene, vinyl polymers such as polyvinyl chloride and copolymers thereof, polycarbonate, polyester, polysulfon, phenoxy resins, epoxy resins and silicone resins have been used.

Of these various resins, polycarbonate resins show relatively excellent characteristics and hence are used popularly. For example, Japanese Patent Publication No. 60-172044-A discloses a polycarbonate resin from bisphenol Z as a binder resin, and Japanese Patent Publication No. 63-170647-A discloses a polycarbonate resin from bisphenol A also as a binder resin.

As regards the electrophotographic photoconductor using these known organic photoconductive materials (to be referred to as "OPC" hereinafter) and various binder resins (to be referred to as "OPC photoconductor" hereinafter), one comparable to an electrophotographic photoconductor using inorganic photoconductive substances has been obtained in terms of sensitivity.

Said OPC photoconductor can be formed into a thin film with ease by means of a cast film-forming method and hence is suitable for mass production and can be provided relatively at a low price.
However, though the OPC photoconductor has these excellent performances, it does not necessarily have satisfactory abrasion resistance and the improvement in abrasion resistance is required.

Several additives have been proposed to improve abrasion resistance. For example, Japanese Patent Publication No. 10-171135-A discloses silicone oil, Japanese Patent Publication No. 2002-268241-A discloses perfluoroalkylacrylate in its examples, Japanese Patent Publication No. 61-219049-A discloses silicone-type comb-shaped graft polymer, as an additive for a binder resin respectively.

To be more precise, Japanese Patent Publication No. 10-171135-A discloses that silicone oil compatible with the constituent materials of the photosensitive layer of an electrophotographic photoconductor is added to the constituent materials by an amount exceeding the compatible limit. When the silicone oil is added by an amount exceeding the compatible limit, the silicone oil may deposit in the layer and clarity may be deteriorated.

Example 5 of Japanese Patent Publication No. 10-268241-A discloses perfluoroalkylacrylate is added at the time of forming a carrier transport layer of an electrophotographic photoconductor. However, 1 part by weight of perfluoroalkylacrylate based upon 4 parts by weight of a binder resin. Since perfluoroalkylacrylate is added in large quantity, it may not be able to keep clarity.

Japanese Patent Publication No. 61-219049-A discloses a mixture of a silicone type comb-shaped graft polymer and a polycarbonate resin. Since the graft polymer has a segment having a silicon atom and a segment having no silicon atoms randomly copolymerized, surface reforming effect by silicone is insufficient and abrasion resistance is not highly improved.

### SUMMARY OF THE INVENTION

The object of the present invention is to solve the problem of the above-mentioned disadvantages of the conventional OPC photoconductors and to provide a resin composition excellent in abrasion resistance when using as a binder resin of an OPC photoconductor and an electrophotographic photoconductor using the same.

The inventors of the present invention paid intensive research efforts to dissolve the above problems and, as a result, they found that an electrophotographic photoconductor using a polycarbonate resin composition comprising an A-B type block copolymer having particular polysiloxane groups as a binder resin shows low surface free energy and is excellent in abrasion resistance, and thus completed the present invention.

Thus, the present invention relates to a polycarbonate resin composition for an electrophotographic photoconductor and an electrophotographic photoconductor using the same shown below.

[1] A resin composition for an electrophotographic photoconductor comprising a polycarbonate resin and a polysiloxane group-containing A-B type block copolymer consisting of
a polysiloxane group-containing copolymer segment-A formed by a vinyl monomer represented by the general formula (1) and a polysiloxane group-containing monomer and
a polymer segment-B formed by a vinyl monomer represented by the general formula (1),
wherein the content of said polysiloxane group-containing monomer is 10 to 85% by weight based upon said polysiloxane group-containing A-B type block copolymer, and the content of said polysiloxane group-containing A-B type block copolymer is
0.03 to 3 parts by weight based upon 100 parts by weight of said polycarbonate resin.

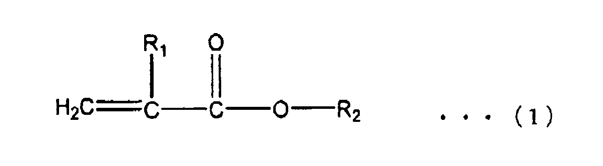

(In the formula (1), R₁ represents a hydrogen atom or a methyl group. R₂ represents a hydrogen atom, an alkyl group having 1 to 18 carbon atoms, or a hydroxyalkyl group having 2 or 3 carbon atoms.)

[2] The resin composition for an electrophotographic photoconductor according to [1], wherein said vinyl monomer represented by the formula (1) is at least one vinyl compound selected from the group consisting of alkyl(meth)acrylate having an alkyl group of 1 to 4 carbon atoms, hydroxyalkyl (meth) acrylate having a hydroxyalkyl group of 2 or 3 carbon atoms and (meth) acrylic acid.

[3]. The resin composition for an electrophotographic photoconductor according to [1] or [2], wherein said polysiloxane group-containing monomer is a polysiloxane compound represented by the following general formula (2) or (4).

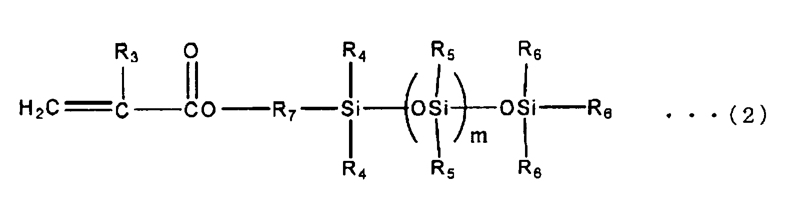

(In the formula (2), R₃ represents a hydrogen atom or a methyl group. R₄ represents a methyl group, an ethyl group, a phenyl group or a group represented by the following general formula (3). R₅ represents a hydrogen atom, a phenyl group or an alkyl group represented by "C_{Q}H_{2Q+1}" wherein Q represents an integer between 1 and 10. R₆ represents a methyl group, an ethyl group, a hydroxy group or a phenyl group. R₇ represents an alkylene group having 1 to 6 carbon atoms or a bond. "m" represents an integer not less than 1.)

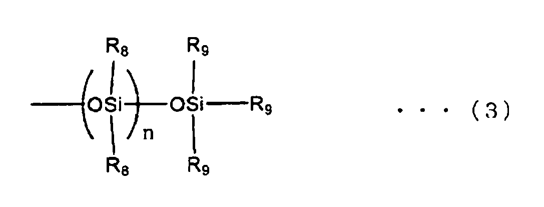

(In the formula (3), R₈ represents a hydrogen atom, a phenyl group or an alkyl group represented by "C_{P}H_{2P+1}" wherein P represents an integer between 1 and 10. R₉ represents a methyl group, an ethyl group or a phenyl group. "n" represents an integer not less than 1.)

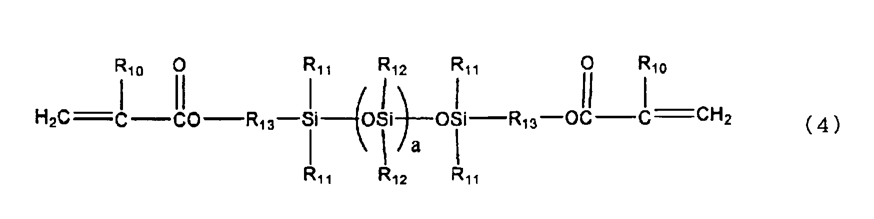

(In the formula (4), R₁₀ represents a hydrogen atom or a methyl group. R₁₁ represents a methyl group, an ethyl group, a phenyl group or a group represented by the following general formula (5). R₁₂ represents a hydrogen atom, a phenyl group or an alkyl group represented by "C_{S}H_{2S+1}" wherein S represents an integer between 1 and 10. R₁₃ represents an alkylene group having 1 to 6 carbon atoms or a bond. "a" represents an integer not less than 1.)

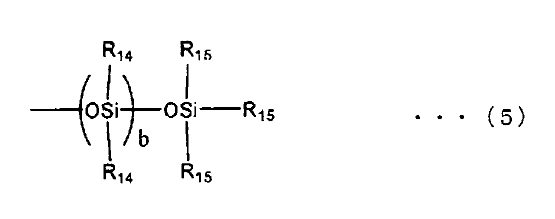

(In the formula (5), R₁₄ represents a hydrogen atom, a phenyl group or an alkyl group represented by "C_{R}H_{2R+1}" wherein R represents an integer between 1 and 10. R₁₅ represents a methyl group, an ethyl group or a phenyl group. "b" represents an integer not less than 1.)

[4] The resin composition for an electrophotographic photoconductor according to any one of [1] to [3], wherein the average molecular weight of said polysiloxane group-containing copolymer segment-A is 100-50,000.

[5] The resin composition for an electrophotographic photoconductor according to any one of [1] to [4], wherein said polysiloxane group-containing A-B type block copolymer is produced by a process comprising
the first step wherein a vinyl monomer represented by the general formula (1) and a polysiloxane group-containing monomer are polymerized to form a polysiloxane group-containing copolymer segment-A, and
the second step wherein a vinyl monomer represented by the general formula (1) is polymerized under the presence of the polysiloxane group-containing copolymer segment-A formed by said first step to form a polymer segment-B.

[6] An electrophotographic photoconductor wherein the resin composition for an electrophotographic photoconductor according to any one of [1] to [5] is used as a binder resin for the photosensitive layer.

[7] An electrophotographic photoconductor having a multi-layer type photosensitive layer comprising a carrier generation layer and a carrier transport layer, wherein the resin composition for an electrophotographic photoconductor according to any one of [1] to [5] is used as a binder resin for the carrier transport layer.

The specific polysiloxane group-containing A-B type block copolymer used for the resin composition for an electrophotographic photoconductor according to the present invention has segments formed by a monomer containing a polysiloxane group arranged in block. Therefore, it is excellent in surface reforming effect by silicone and in improvement effect of abrasion resistance. In addition, since a particular vinyl monomer is used as a comonomer, it has high affinity to a polycarbonate resin.

By using the above-mentioned resin composition of the present invention wherein the specific polysiloxane group-containing A-B type block copolymer is blended in a polycarbonate resin as a binder resin for the electrophotographic photoconductor, abrasion resistance of the electrophotographic photoconductor can be improved while maintaining its electrostatic property. Therefore, improvement in stabilization of electrophotographic images and prolonged service life of the photoconductor is expected.

### DETAILED DESCRIPTION OF THE INVENTION

### 1. Resin Composition for Electrophotographic Photoconductor

The resin composition for the electrophotographic photoconductor of the present invention comprises a polycarbonate resin and a polysiloxane group-containing A-B type block copolymer.

### (1) Polycarbonate Resin

A polycarbonate resin according to the present invention can be obtained by any of the known methods using bisphenols and a carbonate forming compound as starting materials. Examples of such methods include a direct reaction process of bisphenols and phosgene (a phosgene method) and an ester exchange reaction of bisphenols with bisarylcarbonates (a transesterification method).

Examples of bisphenols used for the purpose of the present invention include 4,4'-dihydroxybiphenyl, bis(4-hydroxyphenyl)methane, 1,1-bis(4-hydroxyphenyl)ethane, 2,2-bis(4-hydroxyphenyl)propane, 2,2-bis(4-hydroxyphenyl)butane, 2,2-bis(4-hydroxyphenyl)octane, bis(4-hydroxyphenyl)phenylmethane, 1,1-bis(4-hydroxyphenyl)-1-phenylethane, bis(4-hydroxyphenyl)diphenylmethane, 2,2-bis(4-hydroxy-3-methylphenyl)propane, 1,1-bis(4-hydroxy-3-t-butylphenyl)propane, 2,2-bis(3,5-dimethyl-4-hydroxyphenyl)propane, 2,2-bis(4-hydroxy-3-phenylphenyl)propane, 2,2-bis(3-cyclohexyl-4-hydroxyphenyl)propane, 2,2-bis(4-hydroxy-3-bromophenyl)propane, 2,2-bis(3,5-dibromo-4-hydroxyphenyl)propane, 1,1-bis(4-hydroxyphenyl)cyclopentane, 1,1-bis(4-hydroxyphenyl)cyclohexane, 1,1-bis(4-hydroxyphenyl)cyclododecane, 2,2-bis(4-hydroxy-3-methoxyphenyl)propane, 4,4'-dihydroxyphenylether, 4,4'-dihydroxy-3,3'-dimethylphenylether, 4,4'-dihydroxyphenylsulfide, 4,4'-dihydroxy-3,3'-dimethyldiphenylsulfide, 4,4'-dihydroxydiphenylsulfoxide, 4,4'-dihydroxy-3,3'-dimethyldiphenylsulfoxide, 4,4'-dihydroxydiphenylsulfone, 4,4'-dihydroxy-3,3'-dimethyldiphenylsulfone, 9,9-bis(4-hydroxyphenyl)fluorene, 9,9-bis(4-hydroxy-3-methylphenyl)fluorene, and 9,9-bis(4-hydroxy-3-ethylphenyl)fluorene.

Among them, most suitable examples include 2,2-bis(4-hydroxyphenyl)propane (bisphenol A; "BPA"), 1,1-bis(4-hydroxyphenyl)cyclohexane (bisphenol Z; "BPZ"), 2,2-bis(4-hydroxy-3-methylphenyl)propane (bisphenol C; "BPC") and bis(4-hydroxyphenyl)methane (bisphenol F; "BPF"). These bisphenols can be used each independently, or two or more of them can be used in combination with each other.

Examples of carbonate forming compounds include phosgenes such as phosgene and triphosgene, and bisarylcarbonates such as diphenylcarbonate, di-p-tolylcarbonate, phenyl-p-tolylcarbonate, di-p-chlorophenylcarbonate, dinaphthylcarbonate and the like. Two or more of them can be used in combination with each other.

Among the two processes for producing the polycarbonate resin, a direct reaction process of bisphenols and phosgene (a phosgene method) is conducted by reacting bisphenols with phosgene under the presence of an acid coupling agent and a solvent.

Examples of acid coupling agents include pyridine and hydroxides of alkali metals such as sodium hydroxide, potassium hydroxide and the like. Examples of solvents include methylene chloride, chloroform, chlorobenzene and xylene.
In addition, for the purpose of accelerating the condensation polymerization reaction, it is preferable to add a catalyst such as a tertiary amine such as triethylamine or a quaternary ammonium salt into the reaction system. Moreover, it is also preferable to add monofunctional compounds such as phenol, p-t-butylphenol, p-cumylphenol, a long-chain alkyl-substituted phenol and the like as a molecular weight adjuster for adjusting the degree of polymerization. If desired, an antioxidant such as sodium sulfite or hydrosulfite and/or a branching agent such as fluoroglycin or isatin bisphenol can be added by a small amount.
Generally, it is proper to conduct the reaction in a temperature range between 0°C and 150°C, preferably between 5°C and 40°C. While the reaction time may vary depending on the reaction temperature, it is normally between 0.5 minutes and 10 hours, preferably between 1 minute and 2 hours. It is desirable to keep the pH of the reaction system not below 10 during the reaction.

According to the transesterification method, the above-mentioned bisphenols and bisarylcarbonate are mixed and reacted with each other at high temperature under reduced pressure.
The reaction is generally conducted in a temperature range between 150°C and 350°C, preferably between 200°C and 300°C. The ultimate pressure is preferably reduced to 1mmHg or less to remove the phenols, which are derived from said bisarylcarbonate and are produced as a result of the transesterification method, from the reaction system by distillation.
While the reaction time varies depending on the reaction temperature and the reduced pressure level, it is generally 1 to 4 hours. The reaction is preferably conducted in an atmosphere of inert gas such as nitrogen or argon. If desired, the reaction may be conducted by adding a molecular weight adjuster, an antioxidant and/or a branching agent.
While the molecular weight of the polycarbonate resin according to the present invention is not subjected to any limitation, the intrinsic viscosity thereof is preferably 0.2 to 2 dl/g.

### (2) Polysiloxane group-containing A-B type block copolymer

The polysiloxane group-containing A-B type block copolymer used for the purpose of the present invention is formed from a vinyl monomer and a polysiloxane group-containing monomer.

### (i) Vinyl Monomer

The vinyl monomer used for the above-mentioned polysiloxane group-containing A-B type block copolymer is a compound represented by the general formula (1).

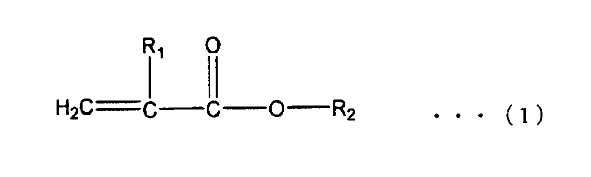

In the formula (1), R₁ represents a hydrogen atom or a methyl group. R₂ represents a hydrogen atom, an alkyl group having 1 to 18 carbon atoms, or a hydroxyalkyl group having 2 or 3 carbon atoms.
That is, the vinyl monomer represented by the above formula (1) is a compound selected from the group consisting of (meth)acrylic acid (R₂ represents a hydrogen atom), alkyl (meth) acrylate having an alkyl group of 1 to 18 carbon atoms (R₂ represents an alkyl group having 1 to 18 carbon atoms), and hydroxyalkyl(meth)acrylate having a hydroxyalkyl group of 2 or 3 carbon atoms (R₂ represents a hydroxyalkyl group having 2 or 3 carbon atoms).

When the alkyl group of the above-mentioned alkyl (meth) acrylate has a carbon chain of more than 18 carbon atoms, there may be defects such that affinity to polycarbonate cannot be obtained sufficiently, or that the polysiloxane group-containing A-B type block copolymer thus synthesized may exhibit tackiness and abrasion resistance derived from polysiloxane cannot be obtained sufficiently.

The alkyl(meth)acrylate preferably has an alkyl group of 1 to 4 carbon atoms. Therefore, the vinyl monomer represented by the above general formula (1) is preferably a compound selected from the group consisting of alkyl(meth)acrylate having an alkyl group of 1 to 4 carbon atoms, hydroxyalkyl(meth)acrylate having a hydroxyalkyl group of 2 or 3 carbon atoms and (meth) acrylic acid.

Furthermore, considering the copolymerizability with a polysiloxane group-containing monomer and affinity to a polycarbonate resin, suitable vinyl monomers for the purpose of the present invention include methyl methacrylate, ethyl methacrylate, propyl methacrylate, butyl methacrylate, hydroxyethyl methacrylate, hydroxypropyl methacrylate and methacrylic acid.

### (ii) Polysiloxane group-containing monomer

Suitable examples of the polysiloxane group-containing monomer used for the above-mentioned polysiloxane group-containing A-B type block copolymer include monomers represented by the following general formula (2) or (4).

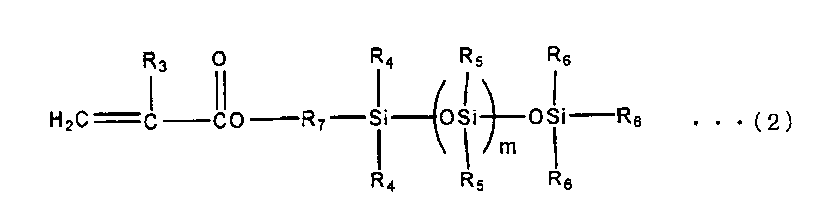

In the formula (2), R₃ represents a hydrogen atom or a methyl group. R₄ represents a methyl group, an ethyl group, a phenyl group or a group represented by the following general formula (3). R₅ represents a hydrogen atom, a phenyl group or an alkyl group represented by "C_{Q}H_{2Q+1}" wherein Q represents an integer between 1 and 10. R₆ represents a methyl group, an ethyl group, a hydroxy group or a phenyl group. R₇ represents an alkylene group having 1 to 6 carbon atoms or a bond. "m" represents an integer not less than 1, preferably an integer of 1 to 700.

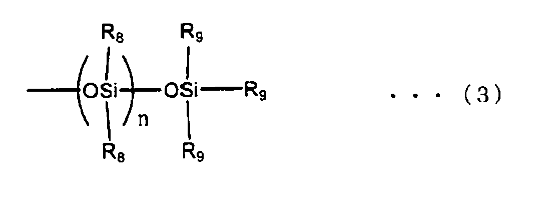

In the formula (3), R₈ represents a hydrogen atom, a phenyl group or an alkyl group represented by "C_{P}H_{2P+1}" wherein P represents an integer between 1 and 10. R₉ represents a methyl group, an ethyl group or a phenyl group. "n" represents an integer not less than 1 preferably an integer of 1 to 700.

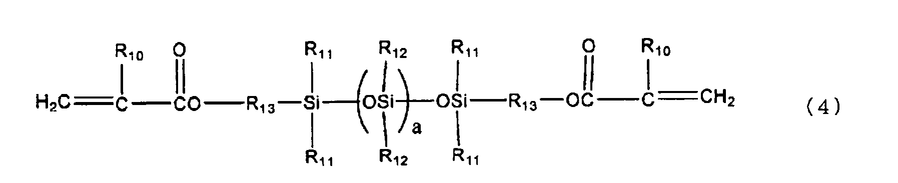

In the formula (4), R₁₀ represents a hydrogen atom or a methyl group. R₁₁ represents a methyl group, an ethyl group, a phenyl group or a group represented by the following general formula (5). R₁₂ represents a hydrogen atom, a phenyl group or an alkyl group represented by "C_{S}H_{2S+1}" wherein S represents an integer between 1 and 10. R₁₃ represents an alkylene group having 1 to 6 carbon atoms or a bond. "a" represents an integer not less than 1, preferably an integer of 1 to 700.

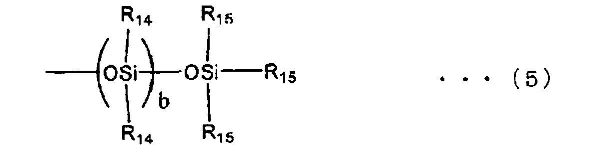

In the formula (5), R₁₄ represents a hydrogen atom, a phenyl group or an alkyl group represented by "C_{R}H_{2R+1}" wherein R represents an integer between 1 and 10. R₁₅ represents a methyl group, an ethyl group or a phenyl group. "b" represents an integer not less than 1, preferably an integer of 1 to 700.

In the formula (2) or (4), R₃-R₇, R₁₀-R₁₃, m, n, a, b, P, Q, R and S can be determined accordingly depending on the monomer represented by the formula (2) or (4) respectively.
Firstly, the polysiloxane group-containing monomer represented by the formula (2) or (4) will be described below. R₄, R₅, R₆, R₁₁, and R₁₂ in the formulas (2) and (4) may be either same or different with each other. Moreover, it is preferable that the polysiloxane group is bonded in the form of branches in order to exhibit the function of the polysiloxane group effectively. These monomers can be used each independently, or two or more of them can be used in combination with each other.

The number average molecular weight of the polysiloxane group-containing monomer represented by the above formula (2) or (4) is preferably 300 to 100,000, more preferably 300 to 50,000, further preferably 1,000 to 20,000. When the number average molecular weight is less than 300, abrasion resistance derived from the polysiloxane group may not be obtained. When the number average molecular weight is more than 100,000, it may be difficult to introduce the polysiloxane group into the copolymer.

Some of the above-described polysiloxane group-containing monomers are commercially available. Examples of the commercially available polysiloxane group-containing monomers include trade name: SILAPLANE FM-0711, FM-0721, FM-0725, TM-0701, TM-0701T, FM-7711, FM-7721, FM-7725, all manufactured by Chisso Corporation.

The above-described polysiloxane group-containing monomers are only examples of the preferable siloxane compounds for the present invention and are not intended to limit the scope of the present invention.

The content of the polysiloxane group-containing monomer in the polysiloxane group-containing A-B type block copolymer of the present invention is 10 to 85% by weight, preferably 20 to 70% by weight, more preferably 30 to 50% by weight. When the content of the polysiloxane group-containing monomer is less than 10% by weight, abrasion resistance may not be exhibited sufficiently. When the content of the polysiloxane group-containing monomer is more than 85% by weight, high polymerization rate may not be obtained.

### (iii) Other monomers

Monomers forming the polysiloxane group-containing A-B type block copolymer of the present invention can include other vinyl monomers than the above-mentioned vinyl monomer represented by the formula (1) and polysiloxane group-containing monomer, if necessary.

Examples of the other vinyl monomers available include aromatic vinyl monomers such as styrene, vinyl toluene and vinyl pyrrolidone; vinyl monomers having hydroxyl groups such as polyethyleneglycol (meth)acrylate and polypropyleneglycol (meth)acrylate; vinyl monomers having amide groups such as (meth)acrylamide, N-methylol-(meth)acrylamide and N-methoxymethyl-(meth)acrylamide; vinyl monomers having carboxyl groups such as itaconic acid, crotonic acid, fumaric acid and maleic acid; butadiene; vinyl chloride; vinylidene chloride; vinyl pyridine; (meth)acrylic nitrile; dibutyl fumarate; maleic anhydride; dodecyl maleic anhydride; dodecyl succinic anhydride; glycidyl (meth)acrylate; (meth)allyl glycidyl ether; alkali metallic salts, ammonium salts or organic amine salts of radical-polymerizable unsaturated carboxylic acid such as (meth)acrylic acid, itaconic acid and crotonic acid; radical-polymerizable unsaturated monomers having sulfonic acid group such as styrene sulfonic acid, alkali metallic salts thereof, ammonium salts thereof or organic amine salts thereof; quaternary ammonium salts derived from (meth)acrylic acid such as 2-hydroxy-3-methacryl-oxypropyl ammonium chloride; esters of (meth) acrylic acid and alcohols having amino groups such as dimethyl aminoethyl (meth)acrylate and diethyl aminoethyl (meth)acrylate and quaternary ammonium salts thereof.

The content of the above-mentioned other vinyl monomers is preferably not more than 20 parts by weight, more preferably not more than 10 parts by weight, further preferably not more than 5 parts by weight, based upon 100 parts by weights of the total monomers constituting the polysiloxane group-containing A-B type block copolymer. When the content falls within the above range, said vinyl monomers can be used as a comonomer. When the content of the other monomers is more than 20 parts by weight, copolymerizability with the polysiloxane group-containing monomer may be deteriorated, or properties derived from polysiloxane of thus obtained block copolymer and/or affinity with polycarbonate may be deteriorated.

### (iv) Polysiloxane group-containing A-B type block copolymer:

The polysiloxane group-containing A-B type block copolymer of the present invention is an A-B type block copolymer comprising a polysiloxane group-containing copolymer segment-A formed by the above-mentioned vinyl monomer represented by the general formula (1) and the polysiloxane group-containing monomer, and a polymer segment-B formed by a vinyl monomer represented by the general formula (1) having no polysiloxane groups.
According to the present invention, abrasion resistance derived from polysiloxane groups and compatibility with a polycarbonate resin derived from vinyl-type monomers can be exhibited in a balanced manner by forming A-B type block copolymer,

### <Segment-A>

The polysiloxane group-containing copolymer segment-A is formed from a copolymer of the polysiloxane group-containing monomer and the vinyl monomer represented by the general formula (1). The average molecular weight of the segment-A is preferably 100 to 100,000, more preferably 100 to 50,000, further preferably 500 to 10,000, most preferably 2,000 to 10,000. When the average molecular weight of the segment-A is less than 100, abrasion resistance derived from polysiloxane groups may not be exhibited. When the average molecular weight of the segment-A is more than 100,000, affinity with polycarbonate may be deteriorated.

The weight ratio between the polysiloxane group-containing monomers and the vinyl monomers represented by the general formula (1) comprised in the above segment-A (= polysiloxane group-containing monomer / vinyl monomer) is preferably 99/1 to 10/90, more preferably 90/10 to 10/90, further preferably 80/20 to 30/70, most preferably 80/20 to 50/50. When the weight ratio is less than 99/1, the polymerization rate of the polysiloxane group-containing monomer may be decreased. When the weight ratio is more than 10/90, abrasion resistance may not be exhibited sufficiently.

### <Segment-B>

The polymer segment-B of the polysiloxane group-containing A-B type block copolymer is formed by the above-mentioned vinyl monomer represented by the general formula (1).

### <Block Copolymer>

The number average molecular weight of the polysiloxane group-containing A-B type block copolymer is preferably 1,000 to 500, 000, more preferably 5, 000 to 100,000. When the number average molecular weight is less than 1,000, abrasion resistance derived from polysiloxane groups may not be exhibited sufficiently. When the number average molecular weight is more than 500,000, compatibility with polycarbonate may be deteriorated.

The weight ratio between the polysiloxane group-containing copolymer segment-A and the polymer segment-B having no polysiloxane groups (= A/B) is preferably 15/85 to 95/5, more preferably 30/70 to 90/10, further preferably 50/50 to 90/10, most preferably 60/40 to 80/20. When the weight ratio is less than 15/85, abrasion resistance derived from polysiloxane groups may not be exhibited sufficiently. When the weight ratio is more than 95/5, the effect of using the A-B type block copolymer may be decreased and affinity with polycarbonate may be deteriorated.

The weight ratio between the vinyl monomer constituting the polysiloxane group-containing copolymer segment-A and the vinyl monomer constituting the polymer segment-B having no polysiloxane groups (= vinyl monomer-A/vinyl monomer-B) is preferably 5/95 to 95/5, more preferably 10/90 to 90/10, most preferably 30/70 to 70/30. When the weight ratio is less than 5/95, the polymerization ratio, which is an introduction ratio of the monomer into the sequencing chain of a polymer, of polysiloxane group-containing monomers may be decreased. When the weight ratio is more than 95/5, abrasion resistance based on polysiloxane groups may be deteriorated.

### (v) Process for preparing the polysiloxane group-containing A-B type block copolymer

Though the process for preparing the polysiloxane group-containing A-B type block copolymer of the present invention is not particularly limited, it is preferably produced by a two-step copolymerization which is a process comprising the first step wherein a vinyl monomer represented by the general formula (1) and a polysiloxane group-containing monomer are polymerized to form a polysiloxane group-containing copolymer segment-A, and the second step wherein a vinyl monomer represented by the general formula (1) is polymerized in the presence of said polysiloxane group-containing copolymer segment-A formed by said first step to form a polymer segment-B.

Known methods commonly used for polymerization of vinyl compounds such as a mass polymerization, a solution polymerization, a suspension polymerization and an emulsion polymerization can be employed for the polymerization process of each step.

In the case of conducting polymerization to produce said A-B type block copolymer according to a solution polymerization, a desired block copolymer can be obtained by conducting a two-step polymerization using polymeric peroxide as a polymerization initiator. Said polymerization can be conducted known processes disclosed in documents such as Japanese Patent Publications No. 5-41668-B, 5-59942-B and 8-26160-B.

Polymeric peroxide used for producing the above-mentioned A-B type block copolymer is a compound having two or more peroxy bonds in one molecule. Examples of the polymeric peroxide include various polymeric peroxides disclosed in Japanese Patent Publication No. 5-41668-B, which can be used each independently, or two or more of them can be used in combination with each other. For example, the compounds represented by the following formulas (6) to (8) are available. In the following formulas (6) to (8), "c" represents an integer of 2 to 20.

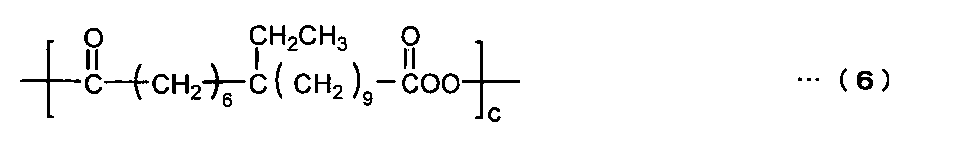

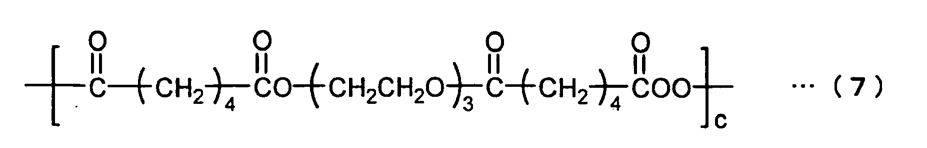

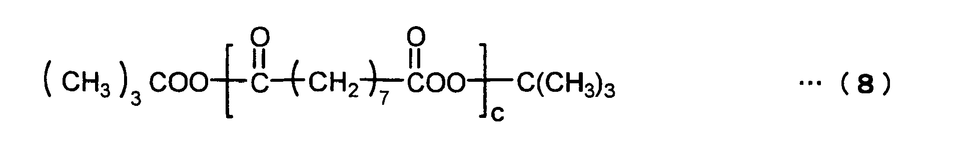

The method for synthesizing the above-mentioned A-B type block copolymer will be described in more detail below:
In the first step, a polysiloxane group-containing monomer and a vinyl monomer represented by the general formula (1) are polymerized in a solution using polymeric peroxide as a polymerization initiator, whereby a copolymer having polysiloxane groups and peroxy bonds in the sequencing chain, which is a copolymer segment-A, is obtained.

In the second step, a vinyl monomer represented by the general formula (1) is added into the solution obtained by the first step and polymerized, whereby peroxy bonds in the sequencing chain of the copolymer segment A is split to form an A-B type block copolymer efficiently.

In the above-mentioned two-step polymerization, it is also possible to conduct polymerization of a vinyl monomer represented by the general formula (1) in the first step and to conduct copolymerization of a polysiloxane group-containing monomer and a vinyl monomer represented by the general formula (1) in the second step. However, it is more preferable to conduct copolymerization of a polysiloxane group-containing monomer, and then a vinyl monomer represented by the general formula (1) in the first step and to conduct polymerization of a vinyl monomer represented by the general formula (1) in the second step.
The amount of polymeric peroxide used in the first step of process for producing the block copolymer is generally 0.5 to 20 parts by weight based upon 100 parts by weight of total monomers used in the first step. In the first step, the polymerization temperature is generally 40 to 130°C and the polymerization time is generally 2 to 12 hours. In the second step, the polymerization temperature is generally 40 to 140°C and the polymerization time is generally 3 to 15 hours.

Examples of organic solvents used for solution polymerization include methylalcohol, ethylalcohol, propylalcohol, 2-propylalcohol, 1-butylalcohol, 2-butylalcohol, 2-methyl-1-propanol, 2-methyl-2-propanol, 1-pentanol, 2-pentanol, 3-pentanol, cyclopentanol, 2-hexanol, 3-hexanol, cyclohexanol, methylcellosolve ethylcellosolve, cellosolve acetate, acetone, 2-butanone, 3-methyl-2-butanone, 2-pentanone, 3-pentanone, 2-methyl-3-pentanone, 3-methyl-2-pentanone, 4-methyl-2-pentanone, 2,4-dimethyl-3-pentanone, 4,4-dimethyl-2-pentanone, 2-hexanone, 3-hexanone, cyclopentanone, cyclohexanone, 2-heptanone, 3-heptanone, 4-heptanone, 2-methyl-3-hexanone, 5-methyl-2-hexanone, 5-methyl-3-hexanone, methyl acetate, ethyl acetate, propyl acetate, isopropyl acetate, butyl acetate, methyl trimethylacetate, isobutyl acetate, sec-butyl acetate, pentyl acetate, isoamyl acetate, methyl propionate, ethyl propionate, propyl propionate, butyl propionate, isobutyl propionate, tert-butyl propionate, methyl butyrate, ethyl butyrate, propyl butyrate, isopropyl butyrate, methyl isobutyrate, ethyl isobutyrate, methyl 2-methyl-butyrate, methyl caproate, benzene, toluene, ethyl benzene, xylene, cyclohexane, hexane, isohexane, isohexene, heptane, octane, isooctane, nonane, isononane, decane, undecane, dodecane, tridecane, isoparaffin solvents such as trade name; NAS-3, NAS-4, NAS-5H, manufactured by NOF Corporation, formaldehyde, acetaldehyde, dimethyl formaldehyde, dimethyl acetaldehyde, acetonitrile, tetrahydrofuran, methyl chloroform, hexafluoroisopropanol and (meta)paraxylenehexafluoride. These solvents can be used each independently, or two or more of them can be used in combination with each other.

Among the above solvents, toluene, ethyl benzene, xylene, hexane, heptane, ethyl acetate, butyl acetate, 2-butanone, 4-methyl-2-pentanone, propylalcohol and 2-propylalcohol are suitable as a solvent having good solubility or dispersibility with the polysiloxane group-containing A-B type block copolymer.

### (3) Resin composition for an electrophotographic photoconductor

The resin composition for an electrophotographic photoconductor of the present invention is a composition comprising the above-mentioned polycarbonate resin and polysiloxane group-containing A-B type block copolymer.
The method for blending them is not particularly limited. For example, it is possible to add the polysiloxane group-containing A-B type block copolymer in the form of polymerization reaction solution into the polycarbonate resin. However, considering of workability, it is more preferable to adding the polysiloxane group-containing A-B type block copolymer in the form of powder after powdering the polymerization product into the polycarbonate resin.

Powdering of the polysiloxane group-containing A-B type block copolymer can be conducted by, after obtaining a reaction solution of the polysiloxane group-containing A-B type block copolymer by the above-mentioned synthetic method, adding a solvent insoluble with the reaction solution into said reaction solution to reprecipitate the polysiloxane group-containing A-B type block copolymer and then filtering and drying the precipitate thus obtained. Powdering of the polysiloxane group-containing A-B type block copolymer can also be conducted by using a spray dryer.

The content of the polysiloxane group-containing A-B type block copolymer in the resin composition for an electrophotographic photoconductor of the present invention is preferably 0.03 to 3 parts by weight, more preferably 0.05 to 2 parts by weight based upon 100 parts by weight of the polycarbonate resin. When the content is less than 0.03 parts by weight, abrasion resistance derived from polysiloxane groups may not be exhibited sufficiently. When the content is more than 3 parts by weight, clarity and electrostatic property may be deteriorated.

If necessary, it is also possible to use other lubricants such as a silicone resin, a fluorocarbon resin or polysilane in combination with the polysiloxane group-containing A-B type block copolymer within the range not losing the properties of the electrophotographic photoconductor of the present invention.
In addition, it is also possible to blend other resins such as various thermoplastic resins and thermosetting resins optionally within the range not losing particular effects of the present invention. Examples of the other resins include vinyl polymers and copolymers such as polymethylmethacrylate, polystyrene and polyvinylchloride; polycarbonate; polyester; polysulfone; phenoxy resins; and epoxy resins. Furthermore, it is possible to add various additives such as an ultraviolet absorbent, an antioxidant and inorganic or organic nanohybrid particles, if desired.

### 3. Electrophotographic photoconductor

The electrophotographic photoconductor according to the present invention has a photosensitive layer (a photoconductive layer) that may be a single layer or a functionally separated multilayer-type layer formed on a conductive support. It is preferable that the electrophotographic photoconductor of the present invention has a multilayer-type photosensitive layer consisting of a carrier generation layer and a carrier transport layer. If necessary, an undercoating layer, a protection layer and/or an adhesive layer can be comprised.

### (1) Conductive support

The conductive support to be used for the present invention can be made of a metal material such as aluminum, stainless steel and nickel, or a polyester film, a phenol resin film or paper having an electrically conductive layer of aluminum, palladium, tin oxide, indium oxide and the like on the surface thereof. The conductive support can be formed in any shape suitable for transferring toner such as a cylindrical shape or a belt shape.

### (2) Photosensitive layer

The photosensitive layer of the electrophotographic photoconductor is formed by a material wherein a carrier generation material which can generate carrier by exposure and a carrier transport material which can transport carrier are dispersed in a binder resin.

Examples of carrier generation materials to be used in the present invention include organic pigments of azoxybenzenes, disazo compounds, trisazo compounds, benzimidazoles, polycyclic quinolines, indigoids, quinacridones, phthalocyanines, perylenes and methines.

Examples of carrier transport materials to be used in the present invention include polytetracyanoethylene, fluorenone compounds such as 2,4,7-trinitro-9-fluorenone, nitro compounds such as dinitroanthracene, succinic anhydride, maleic anhydride, dibromo maleic anhydride, triphenylmethane compounds, oxadiazole compounds such as 2,5-di(4-dimethylaminophenyl)-1,3,4-oxadiazole, styryl compounds such as 9-(4-diethylaminostyryl)anthracene, stilbene compounds such as 4-(2,2-bisphenyl-ethene-1-il)triphenylamine and 4-(2,2-bisphenyl-ethen-1-yl)-4',4''-dimethyltriphenylamine, carbazole compounds such as triphenylamine-poly (N-vinylcarbazole), pyrazoline compounds such as 1-phenyl-3-(p-dimethylaminophenyl)pyrazoline, amine derivatives such as 4,4',4''-tris(N,N-diphenylamino)triphenylamine and N,N'-bis(3-methylphenyl)-N,N'-bis(phenyl)benzidine, conjugated unsaturated compounds such as 1,1-bis(4-diethylaminophenyl)-4,4-diphenyl-1,3-butadiene, hydrazone compounds such as 4-(N,N-diethylamino)benzaldehyde-N,N-diphenylhydrazaone, nitrogen-containing cyclic compounds such as indole compounds, oxazole compounds, isooxazole compounds, thiazole compounds, thiadiazole compounds, imidazole compounds, pyrazole compounds, pyrazoline compounds and triazole compounds, and condensed polycyclic compounds.
Any of the above listed carrier generation materials and carrier transport materials can be used each independently, or two or more of them can be used in combination with each other.

When the electrophotographic photoconductor of the present invention has a single type photosensitive layer, the resin composition of the present invention is used as a binder resin for said photosensitive layer. That is, the electrophotographic photoconductor of the present invention is produced by firstly dispersing a carrier generation material and a carrier transport material into a resin composition of the present invention used as a binder resin, then coating said binder resin onto a conductive support by a known method and subsequently drying it to form a photosensitive layer.

When the electrophotographic photoconductor of the present invention has a multilayer type photosensitive layer consisting of a carrier generation layer and a carrier transport layer, the resin composition of the present invention is used as a binder resin for the carrier transport layer. That is, the electrophotographic photoconductor of the present invention is produced by firstly forming a carrier generation layer by coating a binder resin wherein a carrier generation material is dispersed on a conductive support by a known method and drying it, and subsequently forming a carrier transport layer by coating a binder resin obtained by dispersing a carrier transport into the resin composition of the present invention on said carrier generation layer by known methods and then drying it.

In the case of a multilayer type photosensitive layer, the carrier generation layer is formed by using a binder resin wherein micro particles of any of the above carrier generation materials are dispersed. Examples of the binder resins to be used include a polyvinyl butyral resin, a polyvinyl formal resin, a silicon resin, a polyamide resin, a polyester resin, a polystyrene resin, a polycarbonate resin, a polyvinyl acetate resin, a polyurethane resin, a phenoxy resin, an epoxy resin and various celluloses.

The photosensitive layer, or a carrier generation layer and a carrier transport layer in the case of a multilayer type photosensitive layer, can be formed by dissolving a carrier generation material and/or a carrier transport material and a binder resin into a suitable solution, and then coating the solution by means of a solution casting method, a casting method, a spray coating method, a dip coating method and the like, and subsequently drying it. Solvents to be used can be roughly classified into halogen type organic solvents and non-halogen type organic solvents.

Examples of non-halogen type solvents include aromatic hydrocarbons such as toluene and xylene, ketones such as acetone, methylethylketone, cyclohexanone and isophoron, ethers such as tetrahydrofuran, 1,4-dioxane, ethyleneglycol diethylether and ethylcellosolve, esters such as methyl acetate and ethyl acetate as well as dimethyl formamide, dimethyl sulfoxide and diethyl formamide.
Examples of halogen type solvents include dichloromethane, chloroform, monochlorobenzene, 1,1,1-trichloroethane, monochloroethane and carbon tetrachloride.
For the purpose of the present invention, any of the above-listed solvents may be used independently or in combination of two or more of them with each other.

When dissolving the resin composition of the present invention as a binder resin into a solvent to form a single type photosensitive layer by wet molding, it is preferable to prepare a binder resin solution containing the binder resin within a range between 1 and 50% by weight for use. When dissolving the resin composition of the present invention as a binder resin into a solvent to form a carrier transport layer by wet molding, it is preferable to prepare a binder resin solution containing the binder resin within a range between 1 and 40% by weight for use.
It is also possible to recycle used electrophotographic photoconductors commercially available by dissolving the carrier transport layers of said used electrophotographic photoconductors with a solvent selected from the above listed ones to remove and then forming a new carrier transport layer thereon.

When the electrophotographic photoconductor of the present invention has a single type photosensitive layer, the mixing ratio of sum of the carrier generation material and the carrier transport material to the binder resin in said photosensitive layer is preferably within a range between 10 :1 and 1: 20. To be more precise, the content of the carrier generation material and the carrier transport material is 16 to 84% by weight, more preferably 30 to 70% by weight based upon the total amount of the carrier generation material, the carrier transport material and the binder resin. The preferable thickness of the photosensitive layer is 2 to 100 µm, more preferably 5 to 30 µm.

When the electrophotographic photoconductor of the present invention has a multilayer type photosensitive layer, the mixing ratio of the carrier generation material to the binder resin in said photosensitive layer is preferably within a range between 10:1 and 1: 20. The preferable thickness of the carrier generation layer is 0.01 to 20 µm, more preferably 0.1 to 2 µm.

The mixing ratio of the carrier transport material to the binder resin is preferably within a range between 10:1 and 1:10. To be more precise, the content of the carrier transport material is 16 to 84% by weight, more preferably 30 to 70% by weight based upon the total amount of the carrier transport material and the binder resin. The preferable thickness of the carrier transport layer is 2 to 100 µm, more preferably 5 to 40 µm.

### EXAMPLES

The present invention will be described in more detail below, referring to Examples together with Comparative Examples, which are not intended to limit the scope of the present invention.

### <Example of Synthesis 1>

### Synthesis of an A-B type block copolymer comprising polysiloxane groups (FS-1)

As a first stage polymerization, 80g of methylethylketone was charged to a reactor vessel equipped with a thermometer, an agitator and a reflux condenser and its interior temperature was raised to 70°C in a nitrogen gas stream. Subsequently, a liquid mixture consisting of 60g of methylethylketone, 25g of methyl methacrylate, 5g of hydroxyethyl methacrylate, 30g of a polysiloxane group-containing monomer, manufactured by Chisso Corporation, trade name: "SILAPLANE FM-0725", and 6g of polymeric peroxide represented by the above-mentioned general formula (6) was charged to the reactor vessel taking 2 hours, and then polymerization reaction was conducted for 4 hours to obtain a peroxy bond-containing copolymer solution.

As a second stage polymerization, 15g of methyl methacrylate, 10g of hydroxyethyl methacrylate, 15g of butyl methacrylate and 93g of methylethylketone was mixed and dissolved with said peroxy bond-containing copolymer solution, and then the mixture was charged to a reactor vessel equipped with a thermometer, an agitator and a reflux condenser. Subsequently, the mixture was agitated under a nitrogen gas stream to react at 70°C for 4 hours and then at 80°C for 4 hours to obtain a polysiloxane group-containing A-B type block copolymer solution. After reaction, heptane was added to the solution to reprecipitate, and then filtration and drying was conducted to obtain a polysiloxane group-containing A-B type block copolymer "FS-1". See Table 1 wherein the copolymer was shown as simply "FS-1".

### <Example of Synthesis 2>

### Synthesis of polysiloxane group-containing

### A-B type block copolymers (FS-2 to FS-7)

Synthesis was conducted in the same manner as in Example of Synthesis 1 except for changing the starting monomers and the amount thereof as shown in Table 1 to obtain polysiloxane group-containing A-B type block copolymers "FS-2" to "FS-7". See Table 1 wherein the copolymers were shown as simply "FS-2" to "FS-7".

**Table 1**

| | Monomer Ratio First Stage (parts by weight) | Monomer Ratio Second Stage (parts by weight) |
|---|---|---|
| FS-1 | MMA/HEMA/FM0725=25/5/30 | MMA/BMA/HEMA=15/15/10 |
| FS-2 | MMA/FM0721=40/40 | MMA=20 |
| FS-3 | MMA/HPMA/FM7725=5/25/30 | MMA/HPMA/MAAc=5/25/10 |
| FS-4 | MMA/FM0725=10/70 | MMA=20 |
| FS-5 | MMA/HPMA/MAAc/FM0721=5/5/10/40 | MMA/MAAc=20/20 |
| FS-6 | VMA/FM0725=40/40 | MMA=20 |
| FS-7 | MMA/FM0725=3/7 | MMA=90 |

Terms in the Table 1 represent as follows:
MMA; methyl methacrylate
HEMA; hydroxyethyl methacrylate
BMA; butyl methacrylate
HPMA; hydroxypropyl methacrylate
MAAc; methacrylic acid
FM0725; a polysiloxane group-containing monomer, manufactured by Chisso Corporation, trade name: "SILAPLANE FM-0725", average molecular weight=10,000, mono-terminal type methacrylate.
FM0721; a polysiloxane group-containing monomer, manufactured by Chisso Corporation, trade name: "SILAPLANE FM-0721", average molecular weight=5,000, mono-terminal type methacrylate. FM7725; a polysiloxane group-containing monomer, manufactured by Chisso Corporation, trade name: "SILAPLANE FM-7725", average molecular weight=10,000, bi-terminal type methacrylate. VMA; behenyl methacrylate

### <Example of Synthesis 3>

### Synthesis of a silicone comb-shaped graft polymer (FS-8)

133g of methylethylketone was charged to a reactor vessel equipped with a thermometer, an agitator and a reflux condenser and its interior temperature was raised to 70°C in a nitrogen gas stream. Subsequently, a liquid mixture consisting of 100g of methylethylketone, 50g of methyl methacrylate, 50g of a polysiloxane group-containing monomer, manufactured by Chisso Corporation, trade name: "SILAPLANE FM-0725", and 1.2g of polymerization catalyst, manufactured by NOF Corporation, trade name; "perbutyl PV", was charged to the reactor vessel taking 2 hours, and then polymerization reaction was conducted for 8 hours to obtain a silicone comb-shaped graft polymer solution. After reaction, heptane was added to the solution to reprecipitate, and then filtration under reduced pressure and drying was conducted to obtain a silicone comb-shaped graft polymer "FS-8". See Table 2 wherein the graft polymer was shown as simply "FS-8".

### <Example of Synthesis 4>

### Synthesis of a silicone comb-shaped graft polymer (FS-9)

Synthesis was conducted in the same manner as in Example of Synthesis 3 except for changing the starting monomers and the amount thereof as shown in Table 2 to obtain a silicone comb-shaped graft polymer "FS-9". See Table 2 wherein the copolymers were shown as simply "FS-9".

**Table 2**

| | Monomer Ratio (parts by weight) |
|---|---|
| FS-8 | MMA/FM0725=50/50 |
| FS-9 | MMA/BMA/HEMA/MAAc/FM7725=20/20/20/10/30 |

### <Example 1>

100 parts by weight of a commercially available BPZ type homopolycarbonate resin, manufactured by Mitsubishi Gas Chemical Co., Inc., trade name: Iupizeta PCZ-400 (abbreviated as "PCZ-400" in Table 3), 100 parts by weight of a carrier transport material, manufactured by SYNTEC, trade name: "ST16/1.2" which is a TPD type CT agent, 0.3 parts by weight of polysiloxane group-containing A-B type Copolymer "FS-1" and 400 parts by weight of tetrahydrofuran were mixed with each other to obtain a polycarbonate resin composition coating solution. A preparation was dipped in the coating solution to coat, and dried at room temperature and then dried by heating to prepare a coating preparation having an about 20µm-thick cast film.

Wetting tension of the coating preparation was determined by using Wetting Tension Test based on JIS-K6768. Standard solutions for the Wetting Tension Test, Wetting Tension Test Mixtures, were prepared using methanol, water, ethyleneglycol monoethylether and formaldehyde. The standard solution was spread quickly on the above-mentioned cast film, and then it was observed whether the surface was wet after 2 seconds.

The standard solutions used for the Wetting Tension Test were as follows:
22.6 mN/m (methanol:100%)
27.3 mN/m (methanol:80% by volume, water:20% by volume)
30 mN/m (ethyleneglycol monoethylether:100%)
40 mN/m (ethyleneglycol monoethylether:36.5% by volume, formaldehyde:63.5% by volume)
50 mN/m (ethyleneglycol monoethylether:9.3% by volume, formaldehyde:90.7% by volume)

Abrasion resistance was evaluated as follows:
A metal disc was coated with the above-mentioned polycarbonate resin composition coating solution by a spin coater and dried at room temperature and then dried by heating to prepare a coating disc having an about 20µm-thick cast film.
An abraded amount (mg) of the coating disc was determined by a Taber Abrasion Tester manufactured by Toyo Seiki Seisaku-sho Ltd, after 1000 times of rotation under the condition of load weight: 300g, friction wheel: CS-10.
   The results are shown in Table 3.

### <Example 2>

Evaluations of wetting tension and abrasion resistance were conducted in the same manner as in Example 1 except for using 0.3 parts by weight of "FS-2" in place of 0.3 parts by weight of "FS-1". The results are shown in Table 3.

### <Example 3>

Evaluations of wetting tension and abrasion resistance were conducted in the same manner as in Example 1 except for using 0.3 parts by weight of "FS-3" in place of 0.3 parts by weight of "FS-1". The results are shown in Table 3.

### <Example 4>

Evaluations of wetting tension and abrasion resistance were conducted in the same manner as in Example 1 except for using 0.3 parts by weight of "FS-4" in place of 0.3 parts by weight of "FS-1". The results are shown in Table 3.

### <Example 5>

Evaluations of wetting tension and abrasion resistance were conducted in the same manner as in Example 1 except for using 0.3 parts by weight of "FS-5" in place of 0.3 parts by weight of "FS-1". The results are shown in Table 3.

### <Example 6>

Evaluations of wetting tension and abrasion resistance were conducted in the same manner as in Example 1 except for using 100 parts by weight of a commercially available BPA/BPC copolymer type polycarbonate resin, manufactured by Mitsubishi Gas Chemical Co., Inc., trade name: Iupizeta FPC-2136 (abbreviated as "FPC-2136" in Table 3), in place of 100 parts by weight of "PCZ-400". The results are shown in Table 3.

### <Example 7>

Evaluations of wetting tension and abrasion resistance were conducted in the same manner as in Example 1 except for using 0.03 parts by weight of "FS-1" in place of 0.3 parts by weight of "FS-1". The results are shown in Table 3.

### <Example 8>

Evaluations of wetting tension and abrasion resistance were conducted in the same manner as in Example 1 except for using 3 parts by weight of "FS-1" in place of 0.3 parts by weight of "FS-1". The results are shown in Table 3.

### <Comparative Example 1>

Evaluations of wetting tension and abrasion resistance were conducted in the same manner as in Example 1 except for preparing a cast film without using "FS-1". The results are shown in Table 3.

### <Comparative Example 2>

Evaluations of wetting tension and abrasion resistance were conducted in the same manner as in Example 1 except for using 0.3 parts by weight of "FS-6" in place of 0.3 parts by weight of "FS-1". The results are shown in Table 3.

### <Comparative Example 3>

Evaluations of wetting tension and abrasion resistance were conducted in the same manner as in Example 1 except for using 0.3 parts by weight of "FS-7" in place of 0.3 parts by weight of "FS-1". The results are shown in Table 3.

### <Comparative Example 4>

Evaluations of wetting tension and abrasion resistance were conducted in the same manner as in Example 1 except for using 0.3 parts by weight of "FS-8" in place of 0.3 parts by weight of "FS-1". The results are shown in Table 3.

### <Comparative Example 5>

Evaluations of wetting tension and abrasion resistance were conducted in the same manner as in Example 1 except for using 0.3 parts by weight of "FS-9" in place of 0.3 parts by weight of "FS-1". The results are shown in Table 3.

### <Comparative Example 6>

Evaluations of wetting tension and abrasion resistance were conducted in the same manner as in Example 1 except for using 0.005 parts by weight of "FS-1" in place of 0.3 parts by weight of "FS-1". The results are shown in Table 3.

### <Comparative Example 7>

Evaluations of wetting tension and abrasion resistance were conducted in the same manner as in Example 1 except for using 5 parts by weight of "FS-1" in place of 0.3 parts by weight of "FS-1". The results are shown in Table 3.

**Table 3**

| | Polycarbonate Resin | A-B type Block Copolymer (parts by weight) | Wetting Tension (mN/m) | Abraded Amount (mg) | Remarks |
|---|---|---|---|---|---|
| Example 1 | PCZ-400 | FS-1 ( 0.3) | 22.6 - 27.3 | 2.1 | |
| Example 2 | PCZ-400 | FS-2 ( 0.3) | 22.6 - 27.3 | 2.3 | |
| Example 3 | PCZ-400 | FS-3 ( 0.3) | 22.6 - 27.3 | 2.2 | |
| Example 4 | PCZ-400 | FS-4 ( 0.3) | 22.6 - 27.3 | 2.4 | |
| Example 5 | PCZ-400 | FS-5 ( 0.3) | 22.6 - 27.3 | 2.1 | |
| Example 6 | FPC-2136 | FS-1 ( 0.3) | 22.6 - 27.3 | 2.2 | |
| Example 7 | PCZ-400 | FS-1 (0.03) | 22.6 - 27.3 | 2.4 | |
| Example 8 | PCZ-400 | FS-1 ( 3 ) | ∼ 22.6 | 1.9 | |
| Comparative Example 1 | PCZ-400 | - | 40 - 50 | 4.2 | |
| Comparative Example 2 | PCZ-400 | FS-6 ( 0.3) | - | - | *1 |
| Comparative Example 3 | PCZ-400 | FS-7 ( 0.3) | 30 - 40 | 4.0 | |
| Comparative Example 4 | PCZ-400 | FS-8 ( 0.3) | 27.3 - 30 | 3.2 | |
| Comparative Example 5 | PCZ-400 | FS-9 ( 0.3) | 27.3 - 30 | 3.0 | |
| Comparative Example 6 | PCZ-400 | FS-1 ( 0.005) | 40 - 50 | 4.1 | *1 |
| Comparative Example 7 | PCZ-400 | FS-1 ( 5) | - | - | |

| | | | | | |
|---|---|---|---|---|---|
| *1) Coating films became slightly clouded. | | | | | |

Thus, according to the present invention, it is possible to provide an electrophotographic photoconductor excellent in stability of electrophotographic images and prolonged service life of the photoconductor wherein abrasion resistance is highly improved and surface shaving at the time of repeated uses is suppressed.

## Claims

1. A resin composition for an electrophotographic photoconductor comprising a polycarbonate resin and a polysiloxane group-containing A-B type block copolymer consisting of
a polysiloxane group-containing copolymer segment-A formed by a vinyl monomer represented by the general formula (1) and a polysiloxane group-containing monomer and
a polymer segment-B formed by a vinyl monomer represented by the general formula (1),
wherein the content of said polysiloxane group-containing monomer is 10 to 85% by weight based upon said polysiloxane group-containing A-B type block copolymer, and the content of said polysiloxane group-containing A-B type block copolymer is
0.03 to 3 parts by weight based upon 100 parts by weight of said polycarbonate resin. 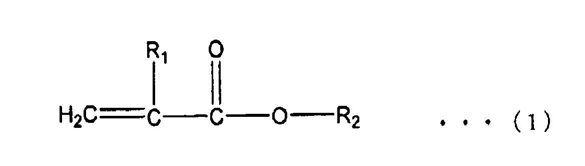 (In the formula (1), R₁ represents a hydrogen atom or a methyl group. R₂ represents a hydrogen atom, an alkyl group having 1 to 18 carbon atoms, or a hydroxyalkyl group having 2 or 3 carbon atoms.)

2. The resin composition for an electrophotographic
photoconductor according to claim 1, wherein said vinyl monomer represented by the formula (1) is at least one vinyl compound
selected from the group consisting of alkyl(meth)acrylate having an alkyl group of 1 to 4 carbon atoms, hydroxyalkyl (meth) acrylate having a hydroxyalkyl group of 2 or 3 carbon atoms and (meth) acrylic acid.

3. The resin composition for an electrophotographic
photoconductor according to claim 1 or 2, wherein said polysiloxane group-containing monomer is a polysiloxane compound represented by the following general formula (2) or (4). 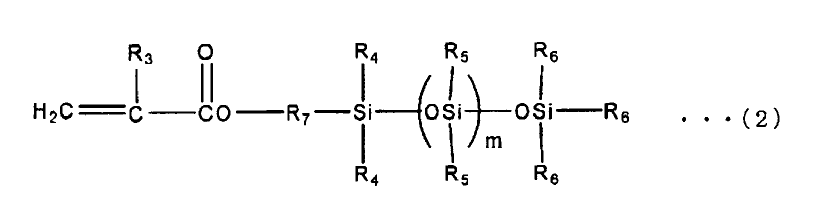 (In the formula (2), R₃ represents a hydrogen atom or a methyl group. R₄ represents a methyl group, an ethyl group, a phenyl group or a group represented by the following general formula (3). R₅ represents a hydrogen atom, a phenyl group or an alkyl group represented by "C_{Q}H_{2Q}+₁" wherein Q represents an integer between 1 and 10. R₆ represents a methyl group, an ethyl group, a hydroxy group or a phenyl group. R₇ represents an alkylene group having 1 to 6 carbon atoms or a bond. "m" represents an integer not less than 1.) 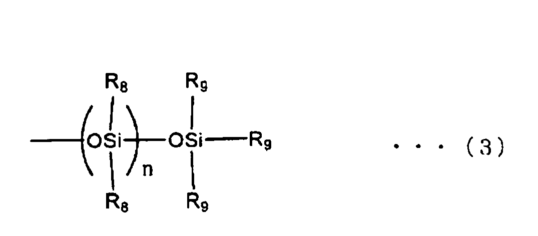 (In the formula (3), R₈ represents a hydrogen atom, a phenyl group or an alkyl group represented by "C_{P}H_{2P+1}" wherein P represents an integer between 1 and 10. R₉ represents a methyl group, an ethyl group or a phenyl group. "n" represents an integer not less than 1.) 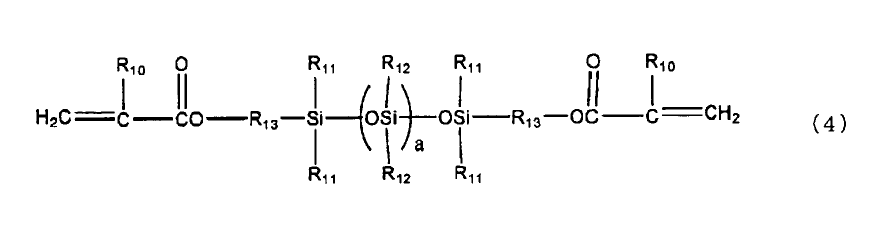 (In the formula (4), R₁₀ represents a hydrogen atom or a methyl group. R₁₁ represents a methyl group, an ethyl group, a phenyl group or a group represented by the following general formula (5). R₁₂ represents a hydrogen atom, a phenyl group or an alkyl group represented by "C_{S}H_{2S+1}" wherein S represents an integer between 1 and 10. R₁₃ represents an alkylene group having 1 to 6 carbon atoms or a bond. "a" represents an integer not less than 1.) 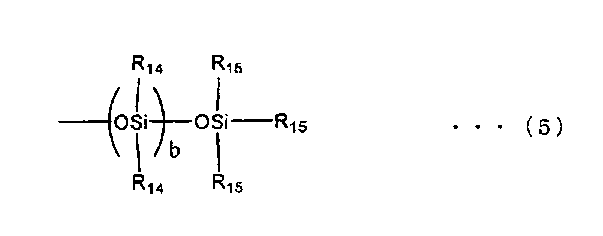 (In the formula (5), R₁₄ represents a hydrogen atom, a phenyl group or an alkyl group represented by "C_{R}H_{2R+1}" wherein R represents an integer between 1 and 10. R₁₅ represents a methyl group, an ethyl group or a phenyl group. "b" represents an integer not less than 1.)

4. The resin composition for an electrophotographic photoconductor according to any one of claims 1 to 3, wherein the average molecular weight of said polysiloxane group-containing copolymer segment-A is 100-50,000.

5. The resin composition for an electrophotographic photoconductor according to any one of claims 1 to 4, wherein said polysiloxane group-containing A-B type block copolymer is produced by a process comprising
the first step wherein a vinyl monomer represented by the general formula (1) and a polysiloxane group-containing monomer are polymerized to form a polysiloxane group-containing copolymer segment-A, and
the second step wherein a vinyl monomer represented by the general formula (1) is polymerized under the presence of the polysiloxane group-containing copolymer segment-A formed by said first step to form a polymer segment-B.

6. An electrophotographic photoconductor wherein the resin composition for an electrophotographic photoconductor according to any one of claims 1 to 5 is used as a binder resin for the photosensitive layer.

7. An electrophotographic photoconductor having a multi-layer type photosensitive layer comprising a carrier generation layer and a carrier transport layer, wherein the resin composition for an electrophotographic photoconductor according to any one of claims 1 to 5 is used as a binder resin for the carrier transport layer.
